# EUROPÄISCHE PATENTSCHRIFT

(11) **EP 4 150 511 B1**
(45) Veröffentlichungstag und Bekanntmachung des Hinweises auf die Patenterteilung: **09.07.2025**
(21) Anmeldenummer: 21728822.4
(22) Anmeldetag: 05.05.2021
(51) Int. Cl.: G08G 1/01, G08G 1/097, G08G 1/09, G06V 10/82, G06V 20/56

(54) **VERFAHREN ZUM STEUERN EINER FLOTTENBASIERTEN ZUSTANDSÜBERWACHUNG EINES STRASSENABSCHNITTS EINES STRASSENNETZES SOWIE ZUGEHÖRIGES SYSTEM UND KRAFTFAHRZEUG UND ZUGEHÖRIGE SERVEREINRICHTUNG**
METHOD FOR CONTROLLING THE FLEET-BASED MONITORING OF THE STATE OF A ROAD SECTION OF A ROAD NETWORK, AND ASSOCIATED SYSTEM AND MOTOR VEHICLE, AND ASSOCIATED SERVER DEVICE
PROCÉDÉ DE COMMANDE D'UNE SURVEILLANCE D'ÉTAT D'UN TRONÇON DE ROUTE D'UN RÉSEAU ROUTIER FAISANT APPEL À UNE FLOTTE, AINSI QUE SYSTÈME ASSOCIÉ, VÉHICULE AUTOMOBILE ET DISPOSITIF SERVEUR ASSOCIÉ

(30) Priorität: 15.05.2020 DE 102020206128
(43) Veröffentlichungstag der Anmeldung: 22.03.2023
(73) Patentinhaber: Continental Automotive Technologies GmbH, 30175 Hannover (DE)
(72) Erfinder: KRETSCHMANN, Matthias, 90411 Nürnberg (DE); HIRNER, Felix, 90411 Nürnberg (DE); SCHWEIGER, Thomas, 90411 Nürnberg (DE)
(74) Vertreter: Continental Corporation
(86) Internationale Anmeldenummer: PCT/DE2021/200059
(87) Internationale Veröffentlichungsnummer: WO 2021/228334

(56) Entgegenhaltungen:
- DE-A1- 102007 042 877
- DE-A1- 102016 003 969
- DE-A1- 102016 216 152
- US-A1- 2008 091 339
- US-A1- 2018 218 596
- US-A1- 2020 139 976

## Beschreibung

Die Erfindung betrifft ein Verfahren zum Steuern einer flottenbasierten Zustandsüberwachung eines Straßenabschnitts eines Straßen- oder Verkehrsnetzes. Zum Durchführen des Verfahrens stellt die Erfindung ein System bereit, wobei auch dessen Komponenten, nämlich eine Servereinrichtung und Kraftfahrzeuge, ebenfalls als ein Bestandteil der Erfindung angesehen werden. Aus dem Stand der Technik ist bekannt, einen Straßenabschnitt eines Straßennetzes mittels einer so genannten Fahrzeugflotte zu überwachen, um den Zustand des Straßenabschnitts in Bezug auf beispielsweise Straßenschäden und/oder vorhandene Verkehrszeichen und andere Verkehrsinfrastrukturkomponenten zu überwachen oder zu überprüfen. Die hierfür genutzte Fahrzeugflotte umfasst in der Regel keine dedizierten Messfahrzeuge, sondern es werden beispielsweise Kraftfahrzeuge von Privatpersonen genutzt, die ebenfalls über eine geeignete Sensorik verfügen können, um die Zustandsüberwachung durchzuführen.

Für die Zustandsüberwachung kann jedes Kraftfahrzeug der Fahrzeugflotte Beobachtungsdaten ermitteln, die zumindest ein in dem Straßenabschnitt befindliches Objekt beschreiben. Mit "Objekt" ist hier eine schadhafte Stelle (Straßenschaden) oder eine Verkehrsinfrastrukturkomponenten gemeint. Die Beschreibungsdaten können dann an eine zentrale Servereinrichtung übertragen werden, wo alle überwachten Objekte beispielsweise auf zumindest eine Eigenschaft hin (z.B. die Größe im Falle eines Straßenschadens) analysiert werden können. In der Servereinrichtung können somit allgemein die Beobachtungsdaten genutzt werden, um den jeweiligen aktuellen Zustand zumindest eines Objekts zu ermitteln. Ein jeweiliges Beispiel für geeignete Beobachtungsdaten sind Bilddaten einer Kamera eines Kraftfahrzeugs und Analysedaten einer Auswertung eines Beschleunigungssignals aus einem Beschleunigungssensor und Erkennungsdaten einer Objekterkennung und Geopositionsdaten eines Objekts (wie sie durch einen Empfänger für ein Positionssignal eines GNSS - "Global Positioning Satellite System" ermittelt werden). Der Zustand kann angeben, ob ein bestimmtes Objekt, beispielsweise ein Straßenschaden, wie beispielsweise ein Schlagloch, vorhanden ist und/oder welche Größe der Straßenschaden aufweist. Der Zustand kann auch das Vorhandensein und/oder den Typ einer Verkehrsinfrastrukturkomponente (beispielsweise Straßenschild oder Ampel) angeben. Eine geeignete Servereinrichtung kann beispielsweise eine Serverplattform des Internets sein.

Die flottenbasierte Zustandsüberwachung eines Straßenabschnitts ist beispielhaft in der US 2014/0160295 A1 beschreiben. Wie dabei mittels eines herkömmlichen Kraftfahrzeugs Straßenschäden in einem Straßenabschnitt überwacht werden können, geht beispielsweise aus der GB 2549088 A und der US 2017/0243370 A1 hervor.

Bei einer flottenbasierten Zustandsüberwachung eines Straßenabschnitts kann die Datenmenge, die von den Kraftfahrzeugen an die zentrale Servereinrichtung gesendet wird, sehr groß werden, da zum Teil redundante Daten an die Servereinrichtung gesendet werden. Auch bei einer falschen Detektion (sogenannter "false positive"), wie sie beispielsweise bei Bordsteinen oder Bremsschwellen vorkommen kann, ergibt sich unnötiger Datenverkehr. Indem in einer Fahrzeugflotte die Sensorik der Kraftfahrzeuge dauerhaft zum Ermitteln neuer Beobachtungsdaten betrieben wird, ergibt sich auch ein unnötiger Energieverbrauch in den Sensoren, was insbesondere bei batteriebetriebenen Sensoren unerwünscht ist, wie sie beispielsweise in Rädern von Kraftfahrzeugen bereitgestellt sein können.

Aus der US 2018/0068495 A1 ist ein Verfahren zum flottenbasierten Detektieren von Straßenschäden bekannt, das schwellwertbasiert arbeitet, damit nicht schon kleine Erschütterungen, wie sie bei einer normalen Fahrt vorkommen können, zu einer fehlerhaften Signalisierung eines vermeintlichen Straßenschadens führen.

Die DE 10 2016 003 969 A1 beschreibt ein Verfahren zum Erfassen von Umgebungsdaten, die zumindest eine Eigenschaft einer Umgebung beschreiben, wie beispielsweise eine Temperatur, eine Fahrbahnglätte oder die Position eines Infrastrukturelements, wobei durch mehrere Kraftfahrzeuge mittels einer jeweiligen Sensoreinrichtung Beobachtungdaten in der Umgebung erfasst werden, und wobei durch eine stationäre Servervorrichtung ein Teil der Beobachtungsdaten empfangen wird und die empfangenen Beobachtungsdaten unterschiedlicher Kraftfahrzeuge auf der Grundlage eines vorbestimmten Aggregationskriteriums zu aktualisierten Umgebungsdaten kombiniert werden. Dabei wird durch die Servereinrichtung auf Grundlage von bereits in einer zentralen Speichereinrichtung gespeicherten Umgebungsdaten ein Mindestanforderungskriterium ermittelt, welches durch aktualisierte Umgebungsdaten zu erfüllen ist und es wird eine das Mindestanforderungskriterium enthaltende Abfragenachricht an die Kraftfahrzeuge ausgesendet. Zudem werden durch die Kraftfahrzeuge die Beobachtungsdaten in einem jeweiligen Fahrzeugspeicher gespeichert und diejenigen Beobachtungsdaten, welche das Mindestanforderungskriterium erfüllen, an die Servervorrichtung ausgesendet.

Der Erfindung liegt die Aufgabe zugrunde, den bei einer flottenbasierten Zustandsüberwachung eines Straßenabschnitts eines Verkehrsnetzes den hierbei zwischen den Kraftfahrzeugen und der Servereinrichtung verursachten Datenverkehr von redundanten Daten und/oder Fehlauslösern zu befreien.

Die Aufgabe wird durch die Gegenstände der unabhängigen Patenansprüche gelöst. Vorteilhafte Ausführungsformen der Erfindung sind durch die abhängigen Patentansprüche, die folgende Beschreibung sowie die Figuren beschrieben.

Die Erfindung stellt ein Verfahren bereit, um eine flottenbasierte Zustandsüberwachung eines Straßenabschnitts eines Straßennetzes zu steuern, wobei mit flottenbasierter Zustandsüberwachung hier gemeint ist, dass Beobachtungsdaten betreffend zumindest ein in dem Straßenabschnitt befindliches Objekt durch Kraftfahrzeuge einer Fahrzeugflotte ermittelt und an eine zentrale Servereinrichtung übertragen werden und dann die Servereinrichtung anhand der Beobachtungsdaten einen aktuellen Zustand des zumindest einen Objekts ermittelt. Dieser Teil des Verfahrens kann in einer aus dem Stand der Technik bekannten Weise und mit aus dem Stand der Technik bekannten Mitteln implementiert sein, wie es bereits eingangs beschrieben wurde.

Um hierbei nun zu vermeiden, dass redundante Beobachtungsdaten und/oder auf einer Fehlauslösung (false positive) basierende Beobachtungsdaten von den Kraftfahrzeugen unnötiger Weise zu der Servereinrichtung gesendet werden, sieht die Erfindung vor, dass durch eine Datenreduktionseinrichtung eine Datenmenge an zu übertragenden Beobachtungsdaten reduziert wird, indem zumindest eine Beschränkungsfunktion in zumindest einem der Kraftfahrzeuge und/oder in der Servereinrichtung betrieben wird. Die jeweilige Beschränkungsfunktion implementiert somit eine Logik, um redundante und/oder nicht in der Servereinrichtung benötigte Beobachtungsdaten gar nicht erst entstehen zu lassen oder zumindest deren Übersendung an die Servereinrichtung zu verhindern. Die jeweilige Beschränkungsfunktion löst eine Ermittlung und/oder Übertragung neuer Beobachtungsdaten nämlich nur aus, falls ein vorbestimmtes Bedarfskriterium an neuen Beobachtungsdaten erfüllt ist. Mit anderen Worten stellt die Datenreduktionseinrichtung also die Menge derjenigen Maßnahmen dar, die in dem System aus Servereinrichtung und Fahrzeugflotte bereitgestellt ist, um überflüssige Beobachtungsdaten zu vermeiden. Jede Maßnahme kann dabei durch eine Beschränkungsfunktion implementiert oder realisiert sein. Was überflüssig oder unnötig ist, kann vom Fachmann durch das Bedarfskriterium für die jeweilige spezifische oder konkrete Zustandsüberwachung festgelegt werden.

Die Datenreduktionseinrichtung wird realisiert, indem in einem jeweiligen Kraftfahrzeug eine oder mehrere Beschränkungsfunktionen implementiert sind. Eine Beschränkungsfunktion kann beispielsweise auf der Grundlage eines Programmcodes oder einer Software für eine Prozessorschaltung des Kraftfahrzeugs bereitgestellt sein, wie sie beispielsweise durch ein Steuergerät oder mehrere Steuergeräte realisiert sein kann. Zusätzlich oder alternativ kann in der Servereinrichtung ebenfalls eine Beschränkungsfunktion als Bestandteil der Datenreduktionseinrichtung realisiert sein. Eine oder mehrere solcher Beschränkungsfunktionen für die Servereinrichtung können durch einen Programmcode oder eine Software für eine Prozessorschaltung der Servereinrichtung bereitgestellt werden. Eine Servereinrichtung kann durch einen Computer oder einen Computerverbund realisiert sein, der beispielsweise im Internet als Internetserver betrieben werden kann. die Übertragung der Beobachtungsdaten von einem jeweiligen Kraftfahrzeug hin zu Servereinrichtung kann beispielsweise auf der Grundlage einer Mobilfunkverbindung und/oder einer WLAN-Verbindung (WLAN - wireless local area network) und/oder einer Internetverbindung realisiert sein.

Durch eine jeweilige Beschränkungsfunktion wird also vor dem Übersenden oder sogar vor dem eigentlichen Erzeugen oder Ermitteln jeweiliger Beobachtungsdaten überprüft, ob diese überhaupt notwendig sind für die Zustandsüberwachung in der Servereinrichtung. Hierzu kann die Beschränkungsfunktion jeweils eine bestimmte Bedingung als Bedarfskriteriums überprüfen und das Ermitteln und/oder Übersenden neuer Beobachtungsdaten nur freigeben oder auslösen, falls die entsprechende Bedingung des Bedarfskriteriums erfüllt ist. Das Bedarfskriterium kann also all diejenigen Bedingungen angeben, die festlegen, wann in der Servereinrichtung ein Bedarf an neuen Beobachtungsdaten für die Zustandsüberwachung notwendig ist. Ein Fachmann kann für eine konkrete Überwachungsaufgabe oder Zustandsüberwachung somit durch Festlegen der Bedingungen einstellen, wie in dem System redundante oder unnötige Beobachtungsdaten erkannt und blockiert werden können.

Durch die Erfindung ergibt sich der Vorteil, dass in dem System aus Servereinrichtung und Fahrzeugflotte überall dort, wo redundante oder unnötige Beobachtungsdaten erzeugt oder übertragen werden könnten, diese mittels einer entsprechenden Beschränkungsfunktion verhindert werden können.

Die Erfindung umfasst auch Ausführungsformen, durch die sich zusätzliche Vorteile ergeben.

Die Zustandsüberwachung bezieht sich erfindungsgemäß auf Straßenschäden, das heißt ein jeweiliges Objekt kann ein Straßenschaden sein, wie beispielsweise ein Schlagloch oder ein Riss in einem Fahrbahnbelag oder allgemein eine Unebenheit oder eine schadhafte Stelle (Schadstelle). Allgemein handelt es sich bei einem Objekt im vorliegenden Sinne insbesondere um ein stationäres Objekt.

In einer Ausführungsform ist zusätzlich oder alternativ dazu vorgesehen, dass mittels der Zustandsüberwachung zumindest eine Verkehrsinfrastrukturkomponente überwacht wird, d.h. ein überwachtes Objekt kann eine Verkehrsinfrastrukturkomponente sein. Eine Verkehrsinfrastrukturkomponente ist ein in dem Straßenabschnitt, am Straßenrand oder auf der Fahrbahn bereitgestelltes Element, welches zur Führung und/oder Regelung des Straßenverkehrs dient. Ein Beispiel für eine Verkehrsinfrastrukturkomponente sind jeweils: eine Ampel, ein Verkehrsschild, eine Baustellenbegrenzung, eine Leitplanke, eine Fahrbahnmarkierung auf einem Fahrbahnbelag. Objekte dieser Art (Straßenschäden und Verkehrsinfrastrukturkomponenten) lassen sich in vorteilhafter Weise mit Kraftfahrzeugen überwachen, die privat genutzt werden oder für einen anderen Zweck gewerblich unterwegs sind, sodass die Verwendung von dedizierten Messfahrzeugen erspart bleibt.

In einer Ausführungsform umfasst die Datenreduktionseinrichtung als eine Beschränkungsfunktion, dass in einem oder mehreren oder jedem der Kraftfahrzeuge und/oder in der Servereinrichtung jeweils ein Klassifikator betrieben wird, welcher Sensordaten zumindest einer Sensorschaltung des Kraftfahrzeugs empfängt und anhand der Sensordaten eine Klassifikation eines in den Sensordaten abgebildeten Objekts durchführt, das sich in dem Straßenabschnitt befindet, und hierdurch eine Objektklasse des Objekts erkennt. Das zugehörige Bedarfskriterium der Beschränkungsfunktion, um über eine weitere Ermittlung von Beobachtungsdaten zu entscheiden, umfasst hierbei insbesondere, dass durch eine Zuordnungsvorschrift festlegt wird, für welche derjenigen Objektklassen, für deren Erkennung der Klassifikator insgesamt eingerichtet ist, Beobachtungsdaten übertragen werden sollen und für welche nicht. Mit anderen Worten werden also im Falle eines fahrzeugseitigen Klassifikators Sensordaten nicht einfach ungeprüft als neue Beobachtungsdaten von dem Kraftfahrzeug zu der Servereinrichtung übertragen. Vielmehr wird lokal in dem Kraftfahrzeug zunächst überprüft, ob die Sensordaten überhaupt ein Objekt beschreiben, für welches Beobachtungsdaten an die Servereinrichtung übertragen werden sollen. Wird ein Klassifikator in der Servereinrichtung betrieben, so kann mit diesem anhand der Zuordnungsvorschrift entschieden werden, ob zu einem Objekt noch weitere, neue Beobachtungsdaten vom selben oder von zumindest einem anderen Kraftfahrzeug angefordert werden sollen. Der in einem Kraftfahrzeug oder in der Servereinrichtung verwendete Klassifikator kann beispielsweise auf der Grundlage einer Methode des maschinellen Lernens (ML), z.B. eines künstlichen neuronalen Netzes, oder einem anderen Algorithmus für künstliche Intelligenz (AI - Artificial Intelligence) basieren. Ein Klassifikator kann mit Trainingsdaten für die Erkennung von Objektklassen trainiert werden. Solche Trainingsdaten stellen Sensordaten dar, zu welchen zusätzlich so genannte Labeldaten bereitgestellt werden, welche beispielsweise von einer Bedienperson angefertigt werden können und welche angeben, welches Objekt oder allgemein welche Objektklasse tatsächlich (ground truth) in den Sensordaten beschrieben ist. Werden dem trainierten Klassifikator dann neue Sensordaten übergeben, so kann er die darin abgebildete Objektklasse signalisieren. Mögliche Objektklassen können sein: Straßenschaden, Straßenschaden einer vorbestimmten Größe, Schlagloch, Schlagloch einer vorbestimmten Größe, Riss, Verkehrsinfrastrukturkomponente, Verkehrsinfrastrukturkomponente eines vorbestimmten Typs, Verkehrsschild, Baustellenabsperrung, Fahrbahnmarkierung, wobei dies nur Beispiele sind. Insbesondere können durch Objektklassen auch unterschiedliche Schadensausmaße oder Schadensgrößen einer Schadstelle eines Fahrbahnbelags signalisiert werden.

Zu welchen der detektierten oder erkannten Objektklassen dann der Servereinrichtung weitere Beobachtungsdaten berichtet werden sollen, kann flexibel durch die Zuordnungsvorschrift festgelegt werden, die hierzu auch adaptiv oder veränderbar ausgestaltet sein kann. Beispielsweise kann vorgesehen sein, dass die Servereinrichtung Zuordnungsdaten zum Festlegen einer aktuell gültigen Zuordnungsvorschrift an das jeweilige Kraftfahrzeug übermittelt. Die Zuordnungsvorschrift kann beispielsweise als Look-up-Tabelle ausgestaltet sein.

Die Klassifikation im Kraftfahrzeug und das Filtern mittels einer Zuordnungsvorschrift, insbesondere einer adaptiv von der Servereinrichtung her anpassbaren Zuordnungsvorschrift, ergibt den Vorteil, dass bereits in dem jeweiligen Kraftfahrzeug das Erzeugen von unerwünschten Beobachtungsdaten unterdrückt oder verhindert werden kann. Insbesondere kann erreicht werden, dass auch falsche Detektionen, wie beispielsweise die Detektion einer Bremsschwelle oder eines Bordsteins als Hindernis auf einer Fahrbahn, mittels der Klassifikation vermieden wird. Die Klassifikation kann als Sensordaten beispielsweise Kameradaten zumindest einer Kamera des Kraftfahrzeugs und/oder Ultraschallmessdaten zumindest eines Ultraschallsensors und/oder Radardaten zumindest eines Radarsensors empfangen und für die Klassifikation verarbeiten.

Eine Ausführungsform sieht eine spezielle Kombination oder Fusion von Sensordaten vor, die sich ansonsten aufgrund eines zeitlichen Versatzes, der zwischen der Entstehung dieser Sensordaten liegt, bisher nicht kombinieren ließen. Hierzu ist vorgesehen, dass zum Bereitstellen von Sensordaten sowohl aus einer Kamera als auch aus einem Beschleunigungssensor, Bilddaten der Kamera in einem Ringpuffer oder ähnlicher Zwischenpuffer als Puffer zwischengespeichert werden und für den Fall, dass durch eine Unebenheit im Fahrbahnbelag in den Beschleunigungsdaten des Beschleunigungssensors ein vorbestimmtes Auslösemuster verursacht wird, die das Auslösemuster enthaltenden Beschleunigungsdaten und zusätzlich aus dem Zwischenpuffer die korrespondierenden Kameradaten, in welchen die Unebenheit abgebildet sein muss, als Sensordaten für einen Input für den Klassifikator kombiniert werden.

Somit können Kamerabilder mit z.B. Beschleunigungsdaten kombiniert werden, ohne dass das Bild zeitgleich mit der Beschleunigung aufgenommen werden muss. Somit können vorausschauenden oder nach hinten gerichteten Kameras verwendet werden. Mit anderen Worten kann der Klassifikator auf Sensordaten zweier unterschiedlicher Sensoren zurückgreifen, nämlich Sensordaten einer Kamera und eines Beschleunigungssensors, um die Klassifikation durchzuführen, was die Klassifikation robuster macht.

Wird nämlich durch eine Kamera ein beispielsweise vorausliegender Straßenabschnitt gefilmt, so wird in den Bilddaten eine Unebenheit schon dann abgebildet, bevor diese Unebenheit durch das Kraftfahrzeug erreicht oder überfahren wird. Erst dann aber, beim Überfahren, kann mittels des Beschleunigungssensors diese Unebenheit ebenfalls gemessen werden. Wir diese Unebenheit als Relevant erkannt, das heißt sie entspricht dem Auslösemuster, beispielsweise einem vorbestimmten zeitlichen Verlauf eines Zeitsignals der Vertikalbeschleunigung, so muss dann auf diejenigen Bilddaten der Kamera zugrückgegriffen werden können, die sich zuvor ergeben haben, als die Unebenheit noch vor dem Kraftfahrzeug lag, um Bilddaten zu der Unebenheit zu erhalten. Hierzu wird der Ringpuffer oder ähnliche temporäre Zwischenpuffer genutzt, aus welchem die korrespondierenden Bilddaten aus der Vergangenheit oder in die Zukunft ausgelesen werden können. Die Größe des Puffers kann an die Bildrate der Kamera und an die vom Kraftfahrzeug erreichbaren Fahrgeschwindigkeiten vom Fachmann angepasst werden.

Um hierbei die besagten korrekten oder korrespondierenden Bilddaten zu finden, ist in einer Ausführungsform vorgesehen, dass aus dem Zwischenpuffer die zu den Beschleunigungsdaten korrespondierenden Bilddaten ausgewählt werden:
a) anhand einer aktuellen Fahrgeschwindigkeit und eines Zeitversatzes zwischen den Bilddaten und einem Überfahrzeitpunkt der Unebenheit (wie er anhand eines Zeitpunkts der Erkennung des Auslösemuster ermittelt werden kann) und/oder
b) anhand einer Raddrehzahl zumindest eines Rads und eines Radiuswerts des jeweiligen Rads.

In dem Zwischenpuffer kann anhand der Bildwiederholungsrate oder so genannten Frame-Rate ermittelt werden, wie weit von einer aktuellen Speicherposition oder einem aktuellen Speicherzeiger im Puffer zu vergangenen Bilddaten zurück gegangen werden muss, um Bilddaten eines vorbestimmten Zeitpunkts in der Vergangenheit zu erreichen. Vom Überfahrzeitpunkt aus gesehen kann mittels der Fahrgeschwindigkeit und der bekannten geometrischen Ausrichtung der Kamera ermittelt werden, zu welchem Zeitpunkt sich die Unebenheit im Erfassungsbereich der Kamera befunden haben muss. Entsprechend kann der Zeitversatz ermittelt werden und daraufhin die korrespondierenden Bilddaten aus dem Puffer ausgelesen werden. Anhand der geometrischen Ausrichtung der Kamera ist an sich bekannt, welcher Abstand sich zwischen dem Erfassungsbereich der Kamera auf dem Fahrbahnbelag und der Position eines jeweiligen Rads befindet. Durch die Raddrehzahl (Drehgeschwindigkeit) oder Anzahl der Radumdrehungen und einen Radius des jeweiligen Rads kann die Zahl der Umdrehungen des Rads und mit der Raddrehzahl der entsprechende Zeitversatz ebenfalls berechnet werden. Der Radiuswert ist bevorzugt dynamisch, das heißt er wird an eine aktuelle Verformung des Reifens des Rads angepasst, wie sie sich beispielsweise durch Abnutzung und/oder Drehgeschwindigkeit und/oder Kurvenlage ergeben kann.

In Bezug auf den erfindungsgemäßen Fall, dass als zumindest ein Objekt ein Straßenschaden, d.h. eine Schadstelle im Fahrbahnbelag, beobachtet oder überwacht wird, ist erfindungsgemäß vorgesehen, dass die Datenreduktionseinrichtung als eine Beschränkungsfunktion umfasst, dass in der Servereinrichtung ausgehend von initialen Beobachtungsdaten (welche die Schadstelle beschreiben) ein Modell für einen zeitlichen Verlauf einer Schadensausweitung oder Schadensveränderung betrieben wird, welches anhand von Wetterdaten und/oder Verkehrsdaten ein Wachstum der Schadstelle im Fahrbahnbelag schätzt und daraus einen geschätzten Zustand ermittelt. Dann sind zunächst überhaupt keine weiteren Beobachtungsdaten notwendig. Das Bedarfskriterium für neue Beobachtungsdaten umfasst aber, dass die initialen Beobachtungsdaten älter als ein Höchstalter sind und/oder der geschätzte Zustand mit einem vorbestimmten kritischen Zustand übereinstimmt, den der Fachmann vorgeben kann. Mit anderen Worten kann auch auf Seiten der Servereinrichtung eine unnötige Erzeugung oder Übertragung von Beobachtungsdaten verhindert werden, indem in der Servereinrichtung mittels des Modells ein geschätzter Zustand eines Straßenschadens ermittelt wird, sodass keine Beobachtungsdaten zum Erkennen des Zustands notwendig sind. Die hierbei beobachtete und überwachte Schadstelle kann einmal durch initiale Beobachtungsdaten vermessen oder beschrieben worden sein, sodass ihr (realer) Anfangszustand bekannt ist. Davon ausgehend kann mittels des Modells ein zeitlicher Verlauf für eine Vergrößerung oder Ausweitung der Schadstelle betrieben werden. Ein solches Modell kann auf digitalen Daten beruhen und beispielsweise durch eine Software oder einen Programmcode betrieben oder realisiert sein.

Mittels des Modells kann der Zustand so lange geschätzt werden, das heißt ein virtueller Zustand in der Servereinrichtung genutzt werden, bis wieder das Bedarfskriterium erfüllt ist, um neue Beobachtungsdaten anzufordern. Das Bedarfskriterium kann zum Beispiel vorsehen, dass es auf Grundlage des geschätzten Zustands höchstens bis zu einem Höchstalter der initialen Beobachtungsdaten genutzt wird, und dann wieder (reale) Beobachtungsdaten angefordert werden. Zusätzlich oder alternativ dazu kann für den Fall, dass der geschätzte Zustand anzeigt, dass die Straßenschaden nun einen vorbestimmten kritischen Zustand aufweist, beispielsweise für den Verkehr hinderlich wird, eine Verifizierung des geschätzten Zustands mittels (realer) Beobachtungsdaten angestoßen oder getriggert werden. Das Modell kann den Einfluss von Witterung beeinflussen, was durch die Wetterdaten beschrieben werden kann (beispielsweise Temperatur und/oder Niederschlag und/oder Frost). Auch die Zahl der Kraftfahrzeuge, die über die Schadstelle fahren und diese beispielsweise brüchig machen, kann berücksichtigt werden durch Einbeziehen von Verkehrsdaten.

Um ein geeignetes Modell breitzustellen, sieht eine Ausführungsform vor, dass durch das Modell eine Schadensausweitung da pro Anzahl dN der die Schadstelle überfahrenden Fahrzeuge (beispielsweise Personenkraftwagen und/oder Lastkraftwagen) in Abhängigkeit von einer jeweiligen Masse M des Fahrzeugs ermittelt wird (Modell da/dN als Funktion von M). Beispielsweise kann durch ein Modell damit ein Risswachstum eines Risses in dem Fahrbahnbelag geschätzt oder simuliert werden. Je mehr schwere Fahrzeuge über die Schadstelle fahren, desto schneller wächst die Schadstelle, das heißt desto größer ist die Rate der Schadensausweitung.

Eine Ausführungsform berücksichtigt, dass bereits in dem Kraftfahrzeug überprüft werden kann, ob eine Servereinrichtung bereits korrekte oder ausreichend genaue Beobachtungsdaten hat, sodass diese nicht noch einmal übersendet werden müssen, was ansonsten zu einem redundanten Datenverkehr führen würde. Hierzu wird der Bestand an denjenigen Zustandsdaten, wie sie in der Servereinrichtung vorliegen, auch in dem Kraftfahrzeug gespeichert und mit neuen Beobachtungsdaten des Kraftfahrzeugs abgeglichen. Diese im Kraftfahrzeug gespeicherten Zustandsdaten sind hier als "Bestandsdaten" bezeichnet. Die Datenreduktionseinrichtung umfasst als eine Beschränkungsfunktion, dass in einem oder mehreren oder jedem der Kraftfahrzeuge jeweils Bestandsdaten, welche die in der Servereinrichtung bereits erfassten Objekte und/oder Zustandsdaten des jeweiligen bereits erkannten Zustands des jeweiligen Objekts beschreiben, gespeichert gehalten werden und in dem Kraftfahrzeug durch eine Prozessorschaltung geprüft wird, ob in dem Kraftfahrzeug ermittelte neue Beobachtungsdaten und die Bestandsdaten ein vorbestimmtes Unterschiedskriterium erfüllen, wobei dann das Bedarfskriterium der zugehörigen Beschränkungsfunktion umfasst, dass nur in dem Fall die neuen Beobachtungsdaten übersendet werden, wenn das Unterschiedskriterium erfüllt ist. Mittels des Unterschiedskriteriums kann der Fachmann also angeben, in wie weit aktuelle neue Beobachtungsdaten von den Bestandsdaten abweichen dürfen, ohne dass die neuen Beobachtungsdaten vom Kraftfahrzeug in die Servereinrichtung übersendet werden. Ist das Unterschiedskriterium erfüllt, weichen also die neuen Beobachtungsdaten entsprechend weit von den Bestandsdaten ab, so werden diese neuen Beobachtungsdaten an die Servereinrichtung übermittelt, damit diese die entsprechenden Zustände der Objekte aktualisieren kann.

In einer Ausführungsform ist vorgesehen, dass durch das Bedarfskriterium zumindest eine der folgenden Bedingungen geprüft wird: die neuen Beobachtungsdaten enthalten Bilddaten und eine Bilddatenübertragung ist nur notwendig, falls
das Objekt noch nicht katalogisiert ist, (also Bilddatenübertragung nur bei neuen Schäden);
eine signifikante Veränderung gemäß einem Veränderungskriterium erkannt wird.

Die Bestandsdaten können auch eine Geometrie und/oder ein Ausmaß des Objekts beschreiben und anhand der neuen Beobachtungsdaten kann eine aktuelle Geometrie und/oder ein aktuelles Ausmaß des Objekts ermittelt werden. Ergibt sich hierbei gemäß dem Veränderungskriterium eine Änderungsrate (Veränderung innerhalb eines vorbestimmten Zeitraums), die größer als ein Schwellenwert ist, und/oder hat sich das Objekt über ein vorbestimmtes Mindestmaß hinaus verändert, so kann dies als Auslöser zum Übertragen von Bilddaten dienen.

Selbst wenn allerdings keine signifikanten Veränderungen auf dem Straßenabschnitt vorliegen, hat es sich als vorteilhaft erwiesen, dennoch auch auf Grundlage von zeitlichen Kriterien das Anfordern neuer Beobachtungsdaten auszulösen, um beispielsweise einen systematischen Fehler auszuschließen, der beispielsweise darin bestehen kann, das aufgrund von Übertragungsfehlern Veränderungen des zumindest einen Objekts durch die Kraftfahrzeuge signalisiert werden. Deshalb umfasst in einer Ausführungsform das Bedarfskriterium, dass in der Servereinrichtung die in der Servereinrichtung vorhandenen Beobachtungsdaten gemäß einem vorbestimmten Auswertekriterium als veraltet oder unvollständig erkannt werden und die Datenreduktionseinrichtung als eine Beschränkungsfunktion umfasst, dass
in der Servereinrichtung Messaufträge zur Beschaffung neuer Beobachtungsdaten auf mehrere der Kraftfahrzeuge aufgeteilt werden, sodass nur einige der Kraftfahrzeuge mit der Beschaffung von Beobachtungsdaten eines jeweiligen Typs ausdrücklich beauftragt sind, und/oder
Inspektionsintervalle zur Beschaffung neuer Beobachtungsdaten nach Straßentyp und/oder Befahrungsdichte und/oder einer geplanten Maßnahmenüberwachung für den Straßenabschnitt getaktet werden, und/oder
ein Abgleich von Infrastrukturdaten betreffend Verkehrsinfrastrukturkomponenten nur in zeitlich begrenzten und zeitlich beabstandeten Messkampagnen erfolgt und zwischen den Messkampagnen die Kraftfahrzeuge das Übersenden der Beobachtungsdaten der Verkehrsinfrastrukturkomponenten unterlassen.

Mit anderen Worten können zwar in einem zeitlichen Raster neue Beobachtungsdaten angefordert werden. Dies kann durch den Fachmann mittels des Auswertekriteriums festgelegt werden, das angibt, wann in der Servereinrichtung vorhandene Beobachtungsdaten als veraltet gelten (weil sie beispielsweise älter als ein vorbestimmtes Höchstalter sind, beispielsweise älter als ein Tag oder älter als zwei Tage oder älter als eine Woche) oder weil sie unvollständig sind, weil beispielsweise der Straßenabschnitt nur mit einer bestimmten Messdichte oder Sample-Dichte beschrieben oder abgedeckt ist. Um hierbei dann aber nicht unnötigen Datenverkehr zu erzeugen, ist auch hier mittels der Datenreduktionseinrichtung sichergestellt, dass auch eine Beschränkungsfunktion greift oder verhindert, dass unnötige neue Beobachtungsdaten unterbleiben. So kann nach jeweiligem Typ von Beobachtungsdaten nur ein Teil der Kraftfahrzeuge mit der Beschaffung neuer Beobachtungsdaten beauftragt werden. Die Inspektionsintervalle zur Beschaffung neuer Beobachtungsdaten können abhängig von der Auslastung oder Befahrungsdichte des Straßenabschnitts festgelegt werden. Für Verkehrsinfrastrukturkomponenten, die keinem Verschleiß durch Verkehr unterliegen, können Messkampagnen zu deren Zustandsüberwachung oder Überprüfung gefahren werden, zwischen denen aber auch Messpausen liegen, in denen die Messkampagnen zeitlich beabstandet sind. In diesen Messpausen unterlassen die Kraftfahrzeuge dann das Senden von Beobachtungsdaten betreffend solche Verkehrsinfrastrukturkomponenten.

Um die Zustandsüberwachung eines Straßenabschnitts durchzuführen, ist durch die Erfindung auch ein System bereitgestellt, dass die beschriebene Servereinrichtung und eine Fahrzeugflotte mit mehreren Kraftfahrzeugen umfasst. Die Servereinrichtung kann in der beschriebenen Weise als Computer oder Computerverbund ausgestaltet sein und beispielsweise als Server oder Serverplattform für das Internet betrieben werden. Die Fahrzeugflotte kann auch Kraftfahrzeugen zusammengesetzt sein, die zusätzlich einem anderen Nutzen, beispielsweise dem Nutzen als Privatfahrzeug oder Transportfahrzeug oder über das Verfahren hinaus genutztes gewerbliches Fahrzeug betrieben werden.

Die Erfindung umfasst auch das System umfassend eine Servereinrichtung der beschriebenen Art und eine Fahrzeugflotte mit mehreren Kraftfahrzeugen der beschriebenen Art. In dem System ist eine Datenreduktionseinrichtung bereitgestellt und das System dazu eingerichtet ist, eine Ausführungsform des erfindungsgemäßen Verfahrens durchzuführen.

Ebenfalls Bestandteil der Erfindung ist das jeweilige Kraftfahrzeug für das erfindungsgemäße System, wobei eine Prozessorschaltung des Kraftfahrzeugs dazu eingerichtet ist, Beobachtungsdaten betreffend zumindest ein in einen Straßenabschnitt befindliches Objekt zu ermitteln und an eine Servereinrichtung des Systems zu übersenden. In dem Kraftfahrzeug ist zumindest eine Beschränkungsfunktion einer Datenreduktionseinrichtung des Systems bereitgestellt und die jeweilige Beschränkungsfunktion gibt eine Ermittlung und/oder Übertragung neuer Beobachtungsdaten nur frei, falls ein vorbestimmtes Bedarfskriterium an neuen Beobachtungsdaten erfüllt ist. Das Kraftfahrzeug kann als Personenkraftwagen oder Lastkraftwagen bereitgestellt sein, um nur Beispiele zu nennen.

Die Servereinrichtung für das erfindungsgemäße System ist Bestandteil der Erfindung, wobei eine Prozessorschaltung der Servereinrichtung dazu eingerichtet ist, anhand von aus Kraftfahrzeugen empfangenen Beobachtungsdaten einen aktuellen Zustand zumindest eines Objekts in einem vorbestimmten Straßenabschnitt zu ermitteln. In der Servereinrichtung ist zumindest eine Beschränkungsfunktion einer Datenreduktionseinrichtung des Systems bereitgestellt und die jeweilige Beschränkungsfunktion gibt eine Ermittlung neuer Beobachtungsdaten nur frei, falls ein vorbestimmtes Bedarfskriterium an neuen Beobachtungsdaten erfüllt ist.

Die jeweilige Prozessorschaltung in einem Kraftfahrzeug oder in der Servereinrichtung kann jeweils beispielsweise auf der Grundlage zumindest eines Mikroprozessors und/oder zumindest eines Mikrocontrollers realisiert sein. Für die durch das Kraftfahrzeug beziehungsweise die Servereinrichtung durchzuführenden Verfahrensschritte kann eine Software oder ein Programmcode mit Programminstruktionen bereitgestellt sein, die bei Ausführen durch die jeweilige Prozessorschaltung diese veranlassen, die Verfahrensschritte auszuführen. Der Programmcode kann in einem Datenspeicher der jeweiligen Prozessorschaltung gespeichert sein.

Im Folgenden ist ein Ausführungsbeispiel der Erfindung beschrieben. Hierzu zeigt:
Fig. 1 eine schematische Darstellung einer Ausführungsform des erfindungsgemäßen Systems; und
Fig. 2 ein Diagramm zur Veranschaulichung eines Modells zum Ermitteln eines geschätzten Zustands eines Objekts in einem Straßenabschnitt, wobei das Modell in einer Servereinrichtung des Systems von Fig. 1 betrieben werden kann.

Bei dem im Folgenden erläuterten Ausführungsbeispiel handelt es sich um eine bevorzugte Ausführungsform der Erfindung.

Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

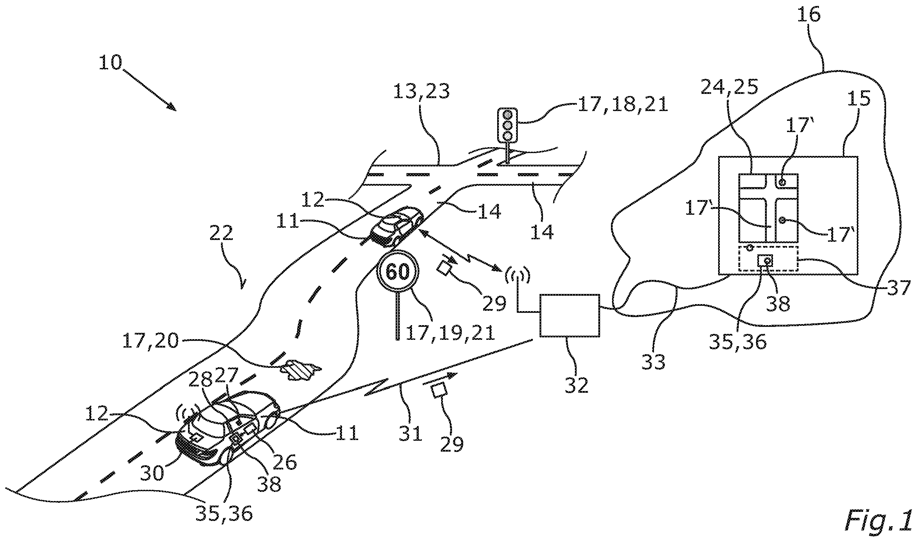

Fig. 1 zeigt ein System 10 mit einer Fahrzeugflotte 11 aus mehreren Kraftfahrzeugen 12, die in einem Straßennetz 13 auf dessen Straßen 14 fahren können. Zu dem System 10 kann eine Servereinrichtung 15 gehören, die beispielsweise als ein Server oder eine Serverplattform des Internets 16 ausgestaltet sein kann. Die Servereinrichtung 15 kann dazu vorgesehen sein, in dem Straßennetz 13 zumindest ein Objekt 17 auf seinen aktuellen Zustand hin zu überwachen oder zu überprüfen. Der Zustand kann umfassen, dass das Vorhandensein des jeweiligen Objekts 17 überprüft wird und/oder an welcher Geoposition sich das Objekt 17 befindet und/oder welche Eigenschaft es aufweist (Größe, Verschmutzung, Typ, beispielsweise Verkehrsschild oder Ampel, oder Aussehen). Als Objekt kann beispielsweise eine Ampel 18 und/oder ein Verkehrsschild 19 und/oder ein Straßenschaden 20 überwacht werden. Eine Ampel 18 und ein Verkehrsschild 19 stellen jeweils eine Infrastrukturkomponente 21 dar. Die Servereinrichtung 15 kann die Überwachung der Objekte 17 für diejenigen Straßen 14 eines vorbestimmten abgegrenzten Areals 22 vornehmen, wobei die Straßen 14 des Straßennetzes 13 in dem Areal 22 einen Straßenabschnitt 23 darstellen. Ein Straßenabschnitt kann also eine einzelne Straße oder ein Teilnetz eines Straßennetzes oder ein Segment einer Straße sein, beispielsweise mit einer Länge in einem Bereich von 100 Metern bis 10 Kilometern.

Die überwachten Objekte 17 können beispielsweise in einer elektronischen Straßenkarte 24 kartographiert werden, wobei dann die jeweilige Geoposition und der Objekttyp den jeweiligen Zustand des Objekts darstellen können und anhand entsprechender den Zustand beschreibende Zustandsdaten in der Straßenkarte entsprechend kartographierte Objekte 17'verfügbar sind. Kartendaten 25 der Straßenkarte 24 können dann beispielsweise zumindest einem Fahrzeug bereitgestellt werden, damit in dem jeweiligen Fahrzeug (nicht dargestellt) eine Information über das jeweilige kartographierte Objekt 17' (d.h. die Zustandsdaten) verfügbar gemacht wird, beispielsweise für eine Fahrerassistenz und/oder für eine Warnung eines Fahrers des Fahrzeugs. Im Rahmen einer Fahrerassistenz kann beispielsweise eine Federhärte in einem Fahrwerk des Fahrzeugs in Abhängigkeit von den Kartendaten 25 betreffend das jeweilige Objekt 17 eingestellt werden und/oder eine autonome Fahrfunktion und/oder eine Fahrgeschwindigkeitsregelung kann in Abhängigkeit von den Kartendaten 25 eine Fahrgeschwindigkeit des Fahrzeugs anpassen.

Damit die Servereinrichtung die Kartendaten 25 bereitstellen kann, muss der jeweilige aktuelle Zustand des jeweiligen Objekts 17 bekannt sein, z.B. dessen Geoposition und/oder sein Objekttyp.

Hierzu kann in dem System 10 die Servereinrichtung 15 die Kraftfahrzeuge 12 nutzen. In jedem Kraftfahrzeug 12 kann eine Sensorschaltung 26 vorgesehen sein, wobei Fig. 1 der Übersichtlichkeit halber nur für ein Kraftfahrzeug 12 die im Folgenden beschriebenen Komponenten zeigt. Die zumindest eine Sensorschaltung 26 kann insgesamt Sensordaten 27 erzeugen, die durch eine Prozessorschaltung 28 des Kraftfahrzeugs 12 empfangen werden können. Anhand der Sensordaten 27 kann die Prozessorschaltung 28 Beobachtungsdaten 29 erzeugen, die über ein Funkmodul 30 des Kraftfahrzeugs 12, beispielsweise ein Mobilfunkmodul und/oder ein WLAN-Funkmodul über eine Kommunikationsverbindung 31 an die Servereinrichtung 15 übermittelt werden können. Beispielsweise können die Beobachtungsdaten 29 über ein Mobilfunknetz 32 und eine Internetverbindung 33 zu der Servereinrichtung 15 übertragen werden. Die Servereinrichtung 15 kann in einer an sich bekannten Weise auf Grundlage der Beobachtungsdaten 29 die Kartendaten 25 mit den darin kartographierten Objekten 17' erzeugen. Die Beobachtungsdaten 29 können beispielsweise Bilddaten zumindest einer Kamera und/oder Erkennungsdaten eines Erkennungsergebnisses einer Erkennung der Objekte 17 (beispielsweise Geoposition und/oder Aussehen und/oder Objekttyp) sein, wie dies eingangs schon beschrieben wurde. Die Beobachtungsdaten 29 können in aus dem Stand der Technik bekannter Weise erzeugt werden.

In dem System 10 ist hierbei sichergestellt, dass keine überflüssigen oder unerwünschten Beobachtungsdaten 29 berechnet und/oder übertragen werden.

Um eine Datenmenge tatsächlich übertragener Beobachtungsdaten 29 gering zu halten, können in der Servereinrichtung 15 und/oder in dem jeweiligen Kraftfahrzeug 12 eine Datenreduktionseinrichtung 35 bereitgestellt sein, durch welche jeweils in der Servereinrichtung 15 und/oder dem Kraftfahrzeug 12 eine oder zumindest eine Beschränkungsfunktion 36 bereitgestellt ist, die beispielsweise durch eine jeweilige Prozessoreinrichtung 37 der Servereinrichtung 15 und/oder der Prozessorschaltung 28 des jeweiligen Kraftfahrzeugs 12 betrieben oder überwacht werden kann. Durch die jeweilige Beschränkungsfunktion 36 kann ein Bedarfskriterium 38 überwacht oder geprüft werden, das erfüllt sein muss, damit überhaupt neue Beobachtungsdaten 29 in dem jeweiligen Kraftfahrzeug 12 erzeugt werden und/oder bereits erzeugte Beobachtungsdaten 29 von dem jeweiligen Kraftfahrzeug 12 an die Servereinrichtung 15 übersendet werden. Eine Beschränkungsfunktion 36 kann auch darin bestehen, dass die Servereinrichtung 15 einen Auftrag zum Erzeugen neuer Beobachtungsdaten unterlässt, sodass auch dies dafür sorgt, dass die Kraftfahrzeuge 12 keine neuen Beobachtungsdaten erzeugen.

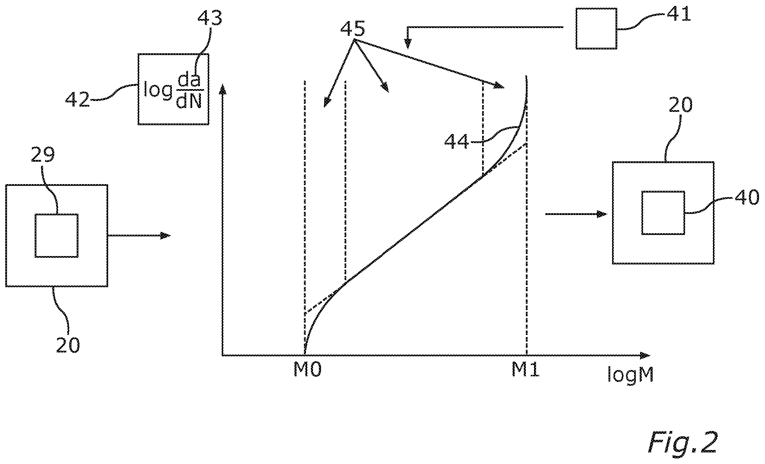

In Fig. 2 ist dargestellt, wie ausgehend von initialen Beobachtungsdaten 29 Zustandsdaten eines simulierten oder geschätzten Zustands 40 erzeugt werden können, indem keine neuen zusätzlichen Beobachtungsdaten 29 durch die Kraftfahrzeuge 11 erzeugt und/oder an die Servereinrichtung 15 übermittelt werden, sondern indem Verkehrsdaten 41 zu dem Straßenabschnitt 23 ermittelt werden, also eine Anzahl der über die Straßen 14 über das jeweilige Objekt 17 gefahrenen Kraftfahrzeuge ermittelt wird und für den Fall, dass es sich bei dem Objekt 17 um einen Straßenschaden 20 handelt, daraus der aktuelle Zustand als geschätzter Zustand 40 für den Straßenschaden 20 ermittelt wird. Das Diagramm zeigt, wie abhängig von einer jeweiligen Masse M eines über den Straßenschaden 20 gerollten Fahrzeugs oder Wagens (in logarithmischer Schreibweise logM dargestellt) sich eine Schadensausweitungsrate 42 ergibt, welche die Schadensausweitung 43 als da pro Anzahl dN der überfahrenden Fahrzeuge oder Wagen ergibt. Auch dies ist logarithmisch als log da/dN aufgetragen. Nimmt man an, dass die Wagen oder Fahrzeuge eine Masse M im Bereich zwischen M0 und M1 aufweisen, so kann in einem Modell 44 beispielsweise eine so genannte Paris-Gerade genutzt werden, um drei Zonen 45 der Schadensausweitungsrate 42 zu unterscheiden. Das dargestellte Modell 44 ist nur beispielhaft gezeigt, ein Fachmann kann je nach Schadensart des Straßenschadens 20 und/oder der Beschaffenheit des Fahrbahnbelags ein Modell durch Versuche und/oder Simulationen ermitteln.

Der Zustand einer Straße und deren Infrastruktur kann somit überwacht werden, um z.B. Wartungsmaßnahmen zu planen. Idee hierbei ist, eine Schwarmintelligenz aller Kraftfahrzeuge zu nutzen, unter der Voraussetzung, dass diese mit bestimmten Komponenten (Kommunikation mit der Servereinrichtung 15 als sogenanntes Backend, elektronische Reifendrucküberwachung, Beschleunigungssensor, Frontkamera) ausgestattet sind.

Dadurch kann in einem vorgebbaren Zeitraum und unter geringem Aufwand, ein Streckennetzanalysiert oder Straßennetz analysiert werden. In einem zweiten Schritt können diese Beobachtungsdaten verwendet werden, um eine bestehende Straßenkarte 24 zu ergänzen.

Bevorzug wird zumindest eine der folgenden Funktionen im System 10 implementiert:
Funktionsgruppe F1:
   1) Erkennen einer Beschädigung des Straßenbelags
   2) Kategorisierung oder Klassifizierung der Beschädigung (Riss, Schlagloch, ...)
   3) Erkennung von "Nicht-Beschädigungen" z.B. Bremsschwellen, Bordsteinen,
Funktionsgruppe F2:
   4) Erkennen der straßennahen Verkehrsinfrastrukturkomponenten (z.B. Schilder, Ampeln)
   5) Kategorisierung oder Klassifizieren der straßennahen Verkehrsinfrastrukturkomponenten
   6) Erkennen von Veränderungen in der straßennahen Infrastruktur

Allgemeine Funktionsgruppe:
7) Reporting der jeweiligen Position und Schadensart / Schildertyp
8) Planung der Ressourcen/ Verteilung der Aufgaben auf die zur Verfügung stehende Fahrzeugflotte mittels der Datenreduktionseinrichtung
9) Umsetzung mit geringem Energie-/ Rechen- und Datenübertragungsaufwand

Beispielshafte Umsetzung für F1- Straßenbelag Monitoring:
1) Erkennung von Straßenschäden / Unregelmäßigkeiten in der Belagsstruktur wird via eines im Reifen montierten Sensors (z.B. dem System eTIS ^{®}) erreicht. Denkbar ist hier zusätzlich oder alternativ ein vertikales Beschleunigungssignal Az oder ein Signal eines Federwegaufnehmers.
2) Zur Klassifizierung der Schäden wird zum einen die spezifische Beschleunigungssignalnatur herangezogen und zum anderen Bilddaten von Bildern der Frontkamera der Sensorik oder Sensorschaltung 26. Hierzu werden bevorzugt die Bilddaten periodisch in einem Ringspeicher abgelegt. Dies ist vorteilhaft, da der Erfassungsbereich der Kameraaufnahme nicht mit dem Sensorereignis eines Beschleunigungssensors übereinstimmt. Tritt ein entsprechendes Ereignis ein, wird das der Position zugehörige Kamerabild an das Backend übermittelt.
3) Klassifikation des Schadens via Image Recognition / AI im Backend (Servereinrichtung 15)

Für die Bilderkennung (Image Recognition) kann folgendes vorgesehen werden:
a. Training des Algorithmus mit einer ausreichenden Datenbasis manuell klassifizierter Schäden und/oder relevanter Infrastrukturelemente
b. Dadurch Vermeidung von falschen Alarmen, z.B. bei Bremsschwellen, Bordsteinen
   4) Zuordnung der Schwere des Schadens über die Beschleunigungssignatur+ Schadenstiefe und über das Kamerabild (Schadensgröße)
   5) Erstellung einer Schadenskarte (z.B. als Straßenkarte 24) / Handlungsempfehlungen für Straßenmeistereien
      a. Ort (Geo-Tag oder Geoposition) der Beschädigung
      b. Signifikante Veränderung des Schadens über die Zeit, d.h. z.B. die Berücksichtigung einer Zunahme durch Frost und/oder weitere Überfahrungen durch Fahrzeuge.
      c. Ableitung eines Faktors für eine Rissausbreitungsgeschwindigkeit über die Veränderung der Beschädigung (z.B. Zunahme der Fläche, Tiefe und Anzahl der Fahrzeuge, die über die Beschädigung fahren. (Analog zur aus dem Stand der Technik bekannten Modellierung der Rissausbreitung in Metallen da/dN vs. deltaK). Ein beispielhaftes Modell 44 ist in Fig. 2 gezeigt. Analogien zum Modell der Rissausbreitung können hierbei sein: dK entspricht M, die Fahrzeugmasse: Denkbar sind hier zwei Klassen Pkw / LKW und/oder die Anwendung für rechte Spur einer Autobahn / restliche Spuren oder eine Mischkalkulation und/oder eine Abhängigkeit von der Schadensgeometrie.
         da - entspricht dem Risswachstum pro Fahrzeug
         dN - Anzahl der überfahrenden Fahrzeuge

Über einen materialspezifischen Parameter und Überfahrhäufigkeit der Schadstelle (Streckenauslastung) kann die Schadensausbreitung abgeschätzt werden.

Beispielhafte Umsetzung für F2- Verkehrssignalüberwachung:
1) Kameraaufnahme der Straßenschilder via Frontkamera
2) Interpretation der Schilder via Bilderkennungsalgorithmus im Fahrzeug
3) Senden des Schildtyps mit Geo-tag (z.B. Geoposition) ans Backend zur Generierung einer Datenbasis

Beispielhafte Umsetzung für eine Reduzierung des Energie- / Rechen- und Datenübertragungsaufwands:
1) Streckenabschnitte werden nur periodisch von einem (oder kleineren Gruppe) Fahrzeug untersucht. Die Abfrage wird via eines Algorithmus im Backend getriggert.
   a. Nur geringe Beeinträchtigung der Batterielebenszeit der Radsensoren (für Scan-Prozess ist eine höhere Abtastrate notwendig)
   b. Vermeidung von mehrfachen Untersuchungen desselben Schadens
   c. Nur Bilddatenübertragung, wenn notwendig+ nicht schon katalogisiert
2) Nur bei neuen Schäden / signifikanter Verschlechterung des Schadens erfolgt eine Übermittlung des Bilddaten an das Backend:
   a. zur erstmaligen Klassifizierung des Schadens,
   b. zur Dokumentation der Schadensentwicklung.
3) Schadenstracking durch flexibel zu definierende Inspektionsintervalle möglich
   a. z.B. häufig befahrene Straßen werden öfter untersucht,
   b. Untersuchungsschwerpunkt kann nach Reparatur und/oder geänderter Streckenführung und/oder einen vorgebbaren Kriterium gesetzt werden.
4) In definierten Abständen Abgleich der Infrastrukturdaten (Schilder und/oder weitere Verkehrsinfrastrukturkomponenten) mit aktuellen Daten aus Fahrzeugen:
   a. Schild, Position und Typ stimmt mit Datenbank (Bestandsdaten) überein, dann keine Aktion, nur Aktualisierung des Zeitstempels für letzte Aktualisierung;
   b. Neues Schild auf Strecke, dann Übermittlung des Typs und Position ans Backend;
   c. Erwartetes Schild nicht angetroffen, dann Bilddaten der Frontkamera an das Backend und z.B. Überprüfung durch Straßenmeisterei, ob das Schild missbräuchlich entfernt wurde.

Klassifizierung der Schäden via ML / AI - Modell (z.B. einen künstlichen neuronalen Netzwerk) kann aus Bilddaten und Beschleunigungssignatur als Input bestehen und Output ist die Schadensart als Klasse (z.B. Riss im Fahrbahnbelag, Schlagloch) und schadensschwere (Größe der Beschädigung, Tiefe der Beschädigung). Ein Statistischer Output kann modelliert werden mittels des Modells 44 als Schadensfortschreitungsgeschwindigkeit analog zu Rissausbreitungsgeschwindigkeit in Metallen.

Dies ermöglicht in vorteilhafter Weise eine langfristige Untersuchung des Straßenzustands zu Wartungsgründen, ein Abschätzung von Wartungszeiträumen über Versagensmodelle, eine sogenannte "Predictive Maintenance" (vorausschauende Wartung). Zur Selektion des entsprechenden Bildes aus dem Ringspeicher wird das exakte Delta t (Überfahren des Schadens mit Rad (VL - vorne links / VR - vorne rechts / HL - hinten links / HR - hinten rechts) und Aufnahmezeitpunkt der Frontkamera aus einer Raddrehzahl und dynamischem Radradiusberechnet und/oder aus der Fahrzeuggeschwindigkeit.

Die Nutzung des "Schwarms" (Fahrzeugflotte) ermöglicht eine Datenreduktion für die einzelnen Kraftfahrzeuge, nämlich eine Verteilung des Payloads oder der Datenerzeugung auf viele einzelne Fahrzeuge und dadurch Vermeidung redundanter Datenaufnahme. Denn nicht zwangsläufig wird jeder Schaden von jedem für die jeweilige Strecke aktivierten Fahrzeug detektiert (Unterschiedliche Spurweiten, Trajektorien, um nur Beispiele zu nennen), aber eine ausreichende Anzahl an Fahrzeugen im Verbund kann einen Schaden zuverlässig erkennen.

Die Servereinrichtung 15 ermöglicht hierbei Cloud-basierte oder netzwerkbasierte Funktionen zur Zustandsüberwachung und die Nutzung von Maschine Learning (ML) und künstliche Intelligent (AI).

Insgesamt zeigt das Beispiel, wie eine flottenbasierte Zustandsüberwachung eines Fahrbahnbelags bereitgestellt werden kann.

## Patentansprüche

1. Verfahren zum Steuern einer flottenbasierten Zustandsüberwachung eines Straßenabschnitts (23) eines Straßennetzes (13), wobei die flottenbasierte Zustandsüberwachung umfasst, dass Beobachtungsdaten (29) betreffend zumindest ein in dem Straßenabschnitt (23) befindliches Objekt (17) durch Kraftfahrzeuge (12) einer Fahrzeugflotte (11) ermittelt und an eine zentrale Servereinrichtung (15) übertragen werden und die Servereinrichtung (15) anhand der Beobachtungsdaten (29) einen aktuellen Zustand des zumindest einen Objekts (17) ermittelt, wobei durch eine Datenreduktionseinrichtung (35) eine Datenmenge an zu übertragenden Beobachtungsdaten (29) reduziert wird, indem zumindest eine Beschränkungsfunktion (36) in einem oder einigen oder allen der Kraftfahrzeuge (12) und/oder in der Servereinrichtung (15) betrieben wird und die jeweilige Beschränkungsfunktion (36) eine Ermittlung und/oder Übertragung neuer Beobachtungsdaten (29) nur auslöst, falls ein vorbestimmtes Bedarfskriterium (38) an neuen Beobachtungsdaten (29) erfüllt ist,
**dadurch gekennzeichnet, dass** zumindest ein Objekt (17) ein Straßenschaden (20) ist und die Datenreduktionseinrichtung (35) als eine Beschränkungsfunktion (36) umfasst, dass in der Servereinrichtung (15) ausgehend von initialen Beobachtungsdaten ein Modell (44) für einen zeitlichen Verlauf einer Schadensausweitung (da, 43) des Straßenschaden (20) betrieben wird, welches anhand von Wetterdaten und/oder Verkehrsdaten (41) ein Wachstum einer den Straßenschaden (20) darstellenden Schadstelle in einem Fahrbahnbelag des Straßenabschnitts (23) schätzt und daraus einen geschätzten Zustand (40) des Fahrbahnbelags ermittelt, und das Bedarfskriterium (36) für neue Beobachtungsdaten umfasst, dass die initialen Beobachtungsdaten älter als ein Höchstalter sind und/oder der geschätzte Zustand mit einem vorbestimmten kritischen Zustand übereinstimmt.

2. Verfahren nach Anspruch 1, in dem zum Bereitstellen von Sensordaten (27) als Beobachtungsdaten (29) sowohl aus einer Kamera als auch aus einem Beschleunigungssensor Daten entnommen werden, Bilddaten der Kamera in einem Puffer zwischengespeichert werden und für den Fall, dass in Beschleunigungsdaten des Beschleunigungssensor ein vorbestimmtes Auslösemuster durch eine Unebenheit im Fahrbahnbelag verursacht wird, die das Auslösemuster enthaltenden Beschleunigungsdaten und aus dem Puffer die korrespondierenden Bilddaten, in welchen die Unebenheit abgebildet ist, als Sensordaten (27) für einen Klassifikator kombiniert werden.

3. Verfahren nach Anspruch 2, wobei Sensordaten (27) sowohl aus einer Kamera als auch aus einem Beschleunigungssensor kombiniert werden, und wo ein zeitlichen Versatz zwischen der Entstehung dieser Sensordaten vorhanden ist und ausgeglichen wird.

4. Verfahren nach Anspruch 2 oder 3, wobei aus dem Zwischenpuffer die zu den Beschleunigungsdaten korrespondierenden Bilddaten ausgewählt werden:
a) anhand einer aktuellen Fahrgeschwindigkeit und eines Zeitversatzes zwischen den Bilddaten und Überfahrzeitpunkt der Unebenheit und/oder
b) anhand einer Raddrehzahl zumindest eines Rads und eines Radiuswerts eine Radius des jeweiligen Rads.

5. Verfahren nach 1, wobei durch das Modell (44) eine Schadensausweitung (da, 43) pro Anzahl (dN) der die Schadstelle überfahrenden Fahrzeuge in Abhängigkeit von einer jeweiligen Masse (M) des jeweiligen Fahrzeuges ermittelt wird.

6. Verfahren nach einem der vorhergehenden Ansprüche, wobei die Datenreduktionseinrichtung (35) als eine Beschränkungsfunktion (36) umfasst, dass in einem oder mehreren oder jedem der Kraftfahrzeuge (12) jeweils Bestandsdaten, welche die in der Servereinrichtung (15) bereits erfassten Objekte (17') und/oder Zustandsdaten des jeweiligen bereit erkannten Zustands des jeweiligen erfassten Objekts (17') beschreiben, gespeichert gehalten werden und in dem Kraftfahrzeug (12) durch eine Prozessorschaltung (28) geprüft wird, ob in dem Kraftfahrzeug (12) ermittelte neue Beobachtungsdaten (29) und die Bestandsdaten ein vorbestimmtes Unterschiedskriterium erfüllen, und das Bedarfskriterium (38) für neue Beobachtungsdaten umfasst, dass nur in diesem Fall die neuen Beobachtungsdaten (29) übersendet werden.

7. Verfahren nach einem der vorhergehenden Ansprüche, wobei Bedarfskriterium (38) für neue Beobachtungsdaten umfasst, dass in der Servereinrichtung (15) die dort bereits vorhandenen Beobachtungsdaten (29) gemäß einem vorbestimmten Auswertekriterium als veraltet oder unvollständig erkannt werden und die Datenreduktionseinrichtung (35) als eine Beschränkungsfunktion (36) umfasst, dass
• in der Servereinrichtung (15) Messaufträge zur Beschaffung neuer Beobachtungsdaten (29) auf mehrere der Kraftfahrzeuge (12) aufgeteilt werden, sodass nur einige der Kraftfahrzeuge (12) mit der Beschaffung von Beobachtungsdaten (29) eines jeweiligen Typs ausdrücklich beauftragt sind, und/oder
• Inspektionsintervalle zur Beschaffung neuer Beobachtungsdaten (29) nach Straßentyp und/oder Befahrungsdichte und/oder einer geplanten Maßnahmenüberwachung für den Straßenabschnitt (23) getaktet werden, und/oder
• ein Abgleich von Infrastrukturdaten betreffend Verkehrsinfrastrukturkomponenten (21) nur in zeitlich begrenzten und zeitlich voneinander beabstandeten Messkampagnen erfolgt und zwischen den Messkampagnen die Kraftfahrzeuge (12) das Übersenden der Beobachtungsdaten (29) der Verkehrsinfrastrukturkomponenten (21) unterlassen.

8. Verfahren nach einem der vorhergehenden Ansprüche, wobei das jeweilige Objekt (17) ein Straßenschaden (20) oder eine Verkehrsinfrastrukturkomponente (21) ist.

9. Verfahren nach einem der vorhergehenden Ansprüche, wobei die Datenreduktionseinrichtung (35) als eine Beschränkungsfunktion (36) umfasst, dass in einem oder mehreren oder jedem der Kraftfahrzeuge (12) und/oder in der Servereinrichtung (15) jeweils ein Klassifikator betrieben wird, welcher Sensordaten (27) zumindest einer Sensorschaltung (26) des Kraftfahrzeugs (12) empfängt und anhand der Sensordaten (27) eine Klassifikation eines in den Sensordaten (27) abgebildeten Objekts (17), das sich in dem Straßenabschnitt (23) befindet, durchführt und hierdurch eine Objektklasse des Objekts (17) erkennt, wobei das Bedarfskriterium (38) für neue Beobachtungsdaten insbesondere umfasst, dass durch eine Zuordnungsvorschrift festlegt wird, für welche der Objektklassen, für deren Erkennung der Klassifikator eingerichtet ist, Beobachtungsdaten (29) übertragen werden und/oder für welche nicht.

10. System (10) umfassend eine Servereinrichtung (15) und eine Fahrzeugflotte (11) mit mehreren Kraftfahrzeugen (12), wobei die Servereinrichtung (15) dazu eingerichtet ist, anhand von Beobachtungsdaten (29) einen aktuellen Zustand zumindest eines Objekts (17) in einem Straßennetz (13) zu überwachen, und wobei jedes der Kraftfahrzeuge (12) jeweils dazu eingerichtet ist, die Beobachtungsdaten (29) betreffend zumindest das in dem Straßenabschnitt (23) befindliche Objekt (17) zu ermitteln und an die Servereinrichtung (15) zu übertragen, wobei in dem System (10) eine Datenreduktionseinrichtung (35) bereitgestellt ist,
**dadurch gekennzeichnet, dass**
das System (10) dazu eingerichtet und bestimmt ist, ein Verfahren nach einem der vorhergehenden Ansprüche durchzuführen.

11. System (10) nach Anspruch 10, wobei eine Prozessorschaltung (28) des Kraftfahrzeugs (12) dazu eingerichtet ist, die Beobachtungsdaten (29) betreffend zumindest das in dem Straßenabschnitt (23) befindliche Objekt (17) zu ermitteln und an die Servereinrichtung (15) des Systems (10) zu übersenden.

12. System (10) nach Anspruch 10, wobei eine Prozessorschaltung (37) der Servereinrichtung (15) dazu eingerichtet ist, anhand von den aus den Kraftfahrzeugen (12) empfangenen Beobachtungsdaten (29) einen aktuellen Zustand des zumindest eines Objekts (17) in einem vorbestimmten Straßenabschnitt (23) zu ermitteln.

## Claims

1. Method for controlling fleet-based condition monitoring of a road section (23) of a road network (13), wherein the fleet-based condition monitoring comprises determining observation data (29) concerning at least one object (17) located in the road section (23) by means of motor vehicles (12) in a vehicle fleet (11) and transmitting said data to a central server device (15) and the server device (15) determining a current condition of the at least one object (17) on the basis of the observation data (29), wherein a data reduction device (35) reduces an amount of observation data (29) to be transmitted by operating at least one restriction function (36) in one or some or all of the motor vehicles (12) and/or in the server device (15) and the respective restriction function (36) triggering a determination and/or transmission of new observation data (29) only if a predetermined requirement criterion (38) for new observation data (29) is met, **characterized in that** at least one object (17) is road damage (20) and the data reduction device (35) comprises, as a restriction function (36), operating a model (44) for a temporal progression of a spread of damage (da, 43) of the road damage (20) in the server device (15) starting from initial observation data, which model, on the basis of weather data and/or traffic data (41), estimates a growth of a damage site constituting the road damage (20) in a road surface of the road section (23) and from this determines an estimated condition (40) of the road surface, and the requirement criterion (36) for new observation data involves the initial observation data being older than a maximum age and/or the estimated condition matching a predetermined critical condition.

2. Method according to Claim 1, in which, in order to provide sensor data (27) as observation data (29), data are taken both from a camera and from an acceleration sensor, image data from the camera are buffered in a buffer and, if a predetermined trigger pattern is caused by an unevenness in the road surface in acceleration data from the acceleration sensor, the acceleration data containing the trigger pattern and the corresponding image data from the buffer, in which the unevenness is represented, are combined as sensor data (27) for a classifier.

3. Method according to Claim 2, wherein sensor data (27) both from a camera and from an acceleration sensor are combined, and wherein a time offset between the formation of these sensor data is present and is compensated for.

4. Method according to Claim 2 or 3, wherein the image data corresponding to the acceleration data are selected from the intermediate buffer:
a) based on a current driving speed and a time offset between the image data and the time at which the unevenness is driven over and/or
b) based on a wheel speed of at least one wheel and a radius value of a radius of the respective wheel.

5. Method according to Claim 1, wherein the model (44) determines a spread of damage (da, 43) per number (dN) of the vehicles driving over the damage site on the basis of a respective mass (M) of the respective vehicle.

6. Method according to one of the preceding claims, wherein the data reduction device (35) comprises, as a restriction function (36), respectively keeping inventory data, which describe the objects (17') already recorded in the server device (15) and/or condition data relating to the respective already detected condition of the respective recorded object (17'), stored in one or more or each of the motor vehicles (12) and a processor circuit (28) in the motor vehicle (12) checking whether new observation data (29) determined in the motor vehicle (12) and the inventory data meet a predetermined difference criterion, and the requirement criterion (38) for new observation data involves the new observation data (29) being sent only in this case.

7. Method according to one of the preceding claims, wherein the requirement criterion (38) for new observation data comprises recognizing, in the server device (15), the observation data (29) already available there as obsolete or incomplete according to a predetermined evaluation criterion and the data reduction device (35) comprising, as a restriction function (36),
• dividing measurement orders for acquiring new observation data (29) between a plurality of the motor vehicles (12) in the server device (15), such that only some of the motor vehicles (12) are explicitly instructed to acquire observation data (29) of a respective type, and/or
• clocking inspection intervals for acquiring new observation data (29) according to road type and/or traffic density and/or planned monitoring of measures for the road section (23), and/or
• comparing infrastructure data relating to traffic infrastructure components (21) only in measurement campaigns that are of a limited time and are separated from one another in terms of time, and the motor vehicles (12) refraining from sending the observation data (29) relating to the traffic infrastructure components (21) between the measurement campaigns.

8. Method according to one of the preceding claims, wherein the respective object (17) is road damage (20) or a traffic infrastructure component (21).

9. Method according to one of the preceding claims, wherein the data reduction device (35) comprises, as a restriction function (36), respectively operating a classifier in one or more or each of the motor vehicles (12) and/or in the server device (15), which classifier receives sensor data (27) from at least one sensor circuit (26) of the motor vehicle (12) and, on the basis of the sensor data (27), classifies an object (17) which is represented in the sensor data (27) and is located in the road section (23), and thereby detects an object class of the object (17), wherein the requirement criterion (38) for new observation data comprises, in particular, using an assignment rule to specify for which of the object classes, for whose detection the classifier is configured, observation data (29) are transmitted and/or for which observation data are not transmitted.

10. System (10) comprising a server device (15) and a vehicle fleet (11) having a plurality of motor vehicles (12), wherein the server device (15) is configured to monitor a current condition of at least one object (17) in a road network (13) on the basis of observation data (29), and wherein each of the motor vehicles (12) is respectively configured to determine the observation data (29) concerning at least the object (17) located in the road section (23) and to transmit said data to the server device (15), wherein a data reduction device (35) is provided in the system (10),
**characterized in that**
the system (10) is configured and intended to perform a method according to one of the preceding claims.

11. System (10) according to Claim 10, wherein a processor circuit (28) of the motor vehicle (12) is configured to determine the observation data (29) concerning at least the object (17) located in the road section (23) and to send said data to the server device (15) of the system (10).

12. System (10) according to Claim 10, wherein a processor circuit (37) of the server device (15) is configured to determine a current condition of the at least one object (17) in a predetermined road section (23) based on the observation data (29) received from the motor vehicles (12).

## Revendications

1. Procédé de commande d'une surveillance d'état d'un tronçon de route (23) d'un réseau routier (13) faisant appel à une flotte, ladite surveillance d'état faisant appel à une flotte comprenant la détermination de données d'observation (29) concernant au moins un objet (17) se trouvant sur le tronçon de route (23) par des véhicules automobiles (12) d'une flotte de véhicules (11) et la transmission de ces données à un dispositif serveur central (15), puis la détermination d'un état instantané dudit au moins un objet (17) par le dispositif serveur (15) sur la base des données d'observation (29), une quantité de données d'observation (29) à transmettre étant réduite par un dispositif de réduction de données (35) grâce à la mise en œuvre d'au moins une fonction de limitation (36) dans un ou dans certains ou dans tous les véhicules automobiles (12) et/ou dans le dispositif serveur (15), et la fonction de limitation respective (36) ne déclenchant une détermination et/ou une transmission de nouvelles données d'observation (29) que si un critère prédéfini (38) de besoin en nouvelles données d'observation (29) est satisfait, **caractérisé en ce qu'**au moins un objet (17) est un dommage routier (20) et le dispositif de réduction de données (35) comprend, en tant que fonction de limitation (36), la mise en œuvre, dans le dispositif serveur (15), sur la base de données d'observation initiales, d'un modèle (44) d'une évolution temporelle d'une propagation de dommage (da, 43) du dommage routier (20), qui estime une croissance d'un point de dommage représentant le dommage routier (20) dans un revêtement de chaussée du tronçon de route (23) sur la base de données météorologiques et/ou de données de trafic (41), et détermine à partir de cela un état estimé (40) du revêtement de chaussée, et le critère de besoin (36) en nouvelles données d'observation comprend le fait que les données d'observation initiales sont plus anciennes qu'un âge maximal et/ou que l'état estimé correspond à un état critique prédéfini.

2. Procédé selon la revendication 1, dans lequel, pour la fourniture de données de capteur (27) en tant que données d'observation (29), des données sont extraites tant d'une caméra que d'un capteur d'accélération, des données d'image de la caméra sont mises en mémoire tampon dans une mémoire intermédiaire et, dans le cas où un motif de déclenchement prédéfini est provoqué dans les données d'accélération du capteur d'accélération par une irrégularité dans le revêtement de chaussée, les données d'accélération contenant le motif de déclenchement et les données d'image correspondantes de la mémoire tampon dans lesquelles l'irrégularité est représentée sont combinées en tant que données de capteur (27) pour un classificateur.

3. Procédé selon la revendication 2, dans lequel les données de capteur (27) sont combinées tant à partir d'une caméra que d'un capteur d'accélération, et où un décalage temporel entre la création de ces données de capteur existe et est compensé.

4. Procédé selon la revendication 2 ou 3, dans lequel les données d'image correspondant aux données d'accélération sont sélectionnées dans la mémoire tampon intermédiaire :
a) sur la base d'une vitesse de conduite instantanée et d'un décalage temporel entre les données d'image et l'instant de passage sur l'irrégularité et/ou
b) sur la base d'une vitesse de rotation d'au moins une roue et d'une valeur de rayon d'un rayon de la roue respective.

5. Procédé selon la revendication 1, dans lequel une propagation de dommage (da, 43) par nombre (dN) de véhicules passant sur le point de dommage est déterminée au moyen du modèle (44) en fonction d'une masse respective (M) du véhicule respectif.

6. Procédé selon l'une quelconque des revendications précédentes, dans lequel le dispositif de réduction de données (35) comprend, en tant que fonction de limitation (36), la conservation en mémoire, dans un ou plusieurs ou chacun des véhicules automobiles (12), de données d'inventaire décrivant les objets (17') déjà enregistrés dans le dispositif serveur (15) et/ou des données d'état concernant l'état respectif déjà reconnu de l'objet (17') respectif déjà détecté, et une vérification, dans le véhicule automobile (12), par un circuit processeur (28), pour établir si de nouvelles données d'observation (29), déterminées dans le véhicule automobile (12), et les données d'inventaire satisfont à un critère de différence prédéfini, et le critère de besoin (38) en nouvelles données d'observation comprenant le fait que les nouvelles données d'observation (29) ne sont transmises que dans ce cas.

7. Procédé selon l'une quelconque des revendications précédentes, dans lequel le critère de besoin (38) en nouvelles données d'observation comprend la reconnaissance, dans le dispositif serveur (15), des données d'observation (29) déjà présentes comme étant obsolètes ou incomplètes conformément à un critère d'évaluation prédéfini, et le dispositif de réduction de données (35) comprenant, en tant que fonction de limitation (36), le fait que
• dans le dispositif serveur (15), des ordres de mesure permettant d'obtenir de nouvelles données d'observation (29) sont répartis entre plusieurs des véhicules automobiles (12), de sorte que seuls certains des véhicules automobiles (12) sont expressément chargés d'obtenir des données d'observation (29) d'un type respectif, et/ou
• des intervalles d'inspection permettant d'obtenir de nouvelles données d'observation (29) sont cadencés en fonction du type de route et/ou de la densité de trafic et/ou d'une surveillance planifiée de mesures pour le tronçon de route (23), et/ou
• une comparaison de données d'infrastructure concernant des composants d'infrastructure de transport (21) n'a lieu que lors de campagnes de mesure limitées dans le temps et espacées dans le temps, et entre les campagnes de mesure, les véhicules automobiles (12) s'abstiennent de transmettre les données d'observation (29) des composants d'infrastructure de transport (21).

8. Procédé selon l'une quelconque des revendications précédentes, dans lequel l'objet (17) respectif est un dommage routier (20) ou un composant d'infrastructure de transport (21).

9. Procédé selon l'une quelconque des revendications précédentes, dans lequel le dispositif de réduction de données (35) comprend, en tant que fonction de limitation (36), la mise en œuvre, dans un ou plusieurs ou chacun des véhicules automobiles (12) et/ou dans le dispositif serveur (15), d'un classificateur qui reçoit des données de capteur (27) d'au moins un circuit capteur (26) du véhicule automobile (12) et effectue, à l'aide des données de capteur (27), une classification d'un objet (17) représenté dans les données de capteur (27) et se trouvant sur le tronçon de route (23), et reconnaît ainsi une classe d'objet de l'objet (17), le critère de besoin (38) en nouvelles données d'observation comprenant en particulier l'établissement par une règle d'attribution des classes d'objets, pour la reconnaissance desquelles le classificateur est conçu, pour lesquelles des données d'observation (29) sont transmises et/ou pour lesquelles elles ne le sont pas.

10. Système (10) comprenant un dispositif serveur (15) et une flotte de véhicules (11) comprenant plusieurs véhicules automobiles (12), le dispositif serveur (15) étant conçu pour surveiller, sur la base de données d'observation (29), un état instantané d'au moins un objet (17) dans un réseau routier (13), et chacun des véhicules automobiles (12) étant conçu pour déterminer les données d'observation (29) concernant au moins l'objet (17) se trouvant sur le tronçon de route (23) et pour les transmettre au dispositif serveur (15), un dispositif de réduction de données (35) étant prévu dans le système (10),
**caractérisé en ce que**
le système (10) est conçu et déterminé pour mettre en œuvre un procédé selon l'une quelconque des revendications précédentes.

11. Système (10) selon la revendication 10, dans lequel un circuit processeur (28) du véhicule automobile (12) est conçu pour déterminer les données d'observation (29) concernant au moins l'objet (17) se trouvant sur le tronçon de route (23) et pour les transmettre au dispositif serveur (15) du système (10).

12. Système (10) selon la revendication 10, dans lequel un circuit processeur (37) du dispositif serveur (15) est conçu pour déterminer, sur la base des données d'observation (29) reçues des véhicules automobiles (12), un état instantané dudit au moins un objet (17) sur un tronçon de route (23) prédéterminé.
